# EUROPEAN PATENT SPECIFICATION

(11) **EP 1 146 998 B1**
(45) Date of publication and mention of the grant of the patent: **22.02.2006**
(21) Application number: 99963795.2
(22) Date of filing: 02.12.1999
(51) Int. Cl.: B25J 17/02, F16C 11/06

(54) **ROBOT DEVICE**
ROBOTERVORRICHTUNG
DISPOSITIF ROBOTIQUE

(30) Priority: 03.12.1998 SE 9804215
(43) Date of publication of application: 24.10.2001
(73) Proprietor: ABB AB, 721 83 Västeras (SE)
(72) Inventor: PERSSON, Fredrik, S-723 38 Väster s (SE); MIKAELSSON, Pierre, S-723 36 Väster s (SE); HVITTFELDT, H kan, S-722 23 Väster s (SE); LARSSON, Jan, S-724 78 Väster s (SE)
(74) Representative: Dahlstrand, Björn
(86) International application number: PCT/SE1999/002255
(87) International publication number: WO 2000/032363

(56) References cited:
- EP-A2- 0 705 990
- US-A- 3 856 423
- US-A- 4 203 683
- US-A- 4 695 182
- US-A- 4 976 582

## Description

### TECHNICAL FIELD

The present invention relates to a device, use and method to eliminate the risk of play in a three-axle joint in a robot.

### PRIOR ART

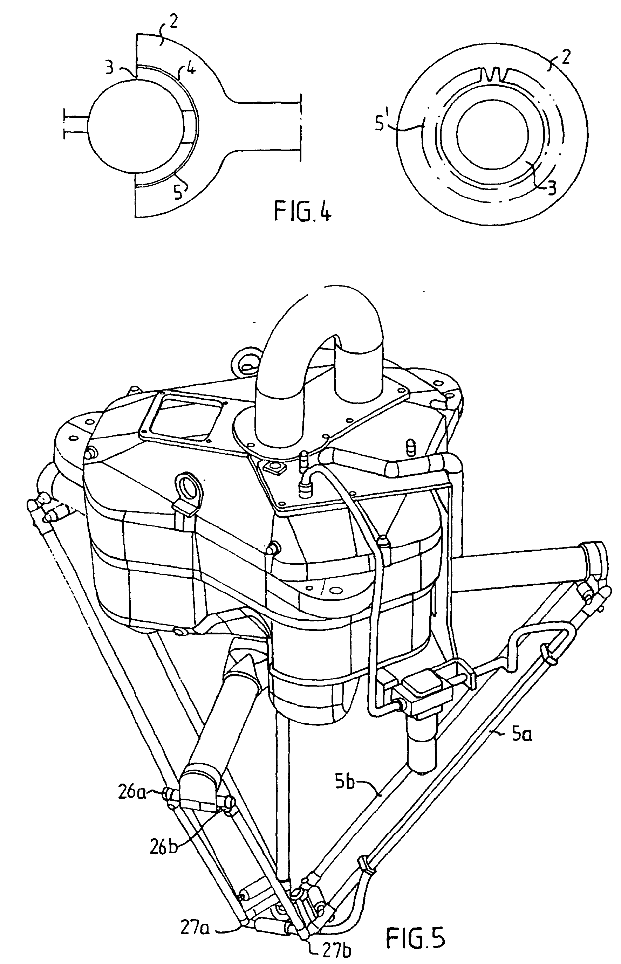

In a delta robot, a positioning of a moveable element in relation to a fixed element takes place (Fig. 5). Three driving means each drive their own link device arranged between the fixed and the moveable elements. The link devices can include rods arranged in multi-joint systems where the joints can comprise ball and socket joints.

The American document US,A, 4 976 582 shows, among other things, a delta robot with two parallel links 5a and 5b joined to pivot with ball and socket joints 26a, 26b, 27a, and 27b (Fig. 5). The joint sockets are attached to the ends of the links.

The American document US,A, 4 203 683 shows bearing means designed with an annular recess in a bore and in the annular recess is located a bearing annulus to prevent contact of the ball with the metal housing. A cap prevents excessive penetration of the ball into the bore.

The American document US,A, 4 3 967 907 shows an outer cup formation being fitted on a socket part of a joint and the cup has elevations. These elevations are there to increase the possibility to introduce lubricant to the joint.

The ball and socket joints according to the invention are designed with replaceable bearing means that minimise friction in the joints. The bearing means has a socket-shaped inner surface and is manufactured in self-lubricating polymer material. The bearing means is arranged in a seat in the joint socket. During the operation of the robot, rotational movements take place in the ball and socket joints and directional movements also occur.

Problems arise when the bearing means follows the rotational movement, i.e. follows the rotation movement of the ball of the joint. In this situation, link movements take place at the same radii take place at the joint socket at each stroke of the linkage device, whereby wear occurs repeatedly at the same location. An uneven wear occurs in the joint, which causes play in the joint and thus increased friction in the joint. The reason that the bearing means rotates with the ball joint is that the material in the bearing means is too soft to ensure a good tight fit in the seat.

A robot including a joint / joints with play does not work at a smooth pace but is disturbed in its movement as the joints bind and the movements become imprecise. The balance of moments in the construction is disturbed, which drastically reduces the working life of the robot. The cycle time increases and the robot cannot meet its performance requirements.

In the operation of robots, the need thus arises to firmly fix a bearing means in a seat in a joint socket This need cannot be met by the delta robot in the American document

### SUMMARY OF THE INVENTION

When designing delta robots, the objective according to the invention is to achieve a design with a low weight that can handle a stroke time of 0.5 seconds. To achieve robots that are this fast, the joint must be designed so that friction is minimised.

A certain wear on the bearing means in a joint is unavoidable. An even wear of a self-lubricating bearing means gives an even lubrication of and a smooth movement in the joint. When the wear is even, no unwanted play occurs and the robot has a smooth, rapid operation.

The object of the present invention is thus to achieve a robot including a means with which one increases the friction between bearing means and socket in a ball and socket joint. An additional object of the invention is to design the device so that it allows an easy replacement of bearing means according to need.

### DESCRIPTION OF THE DRAWING

The invention will be explained in greater detail by describing an example of an embodiment with reference to the enclosed drawings, where;
Fig. 1 shows a socket of a joint according to the invention,
Fig. 2 shows a joint socket according to the invention,
Fig. 3 shows a joint socket according to the invention arranged with grooves,
Fig. 4 shows an alternative design with a socket-shaped seat and bearing means,
Fig. 5 shows a delta robot

### DESCRIPTION OF EMBODIMENTS

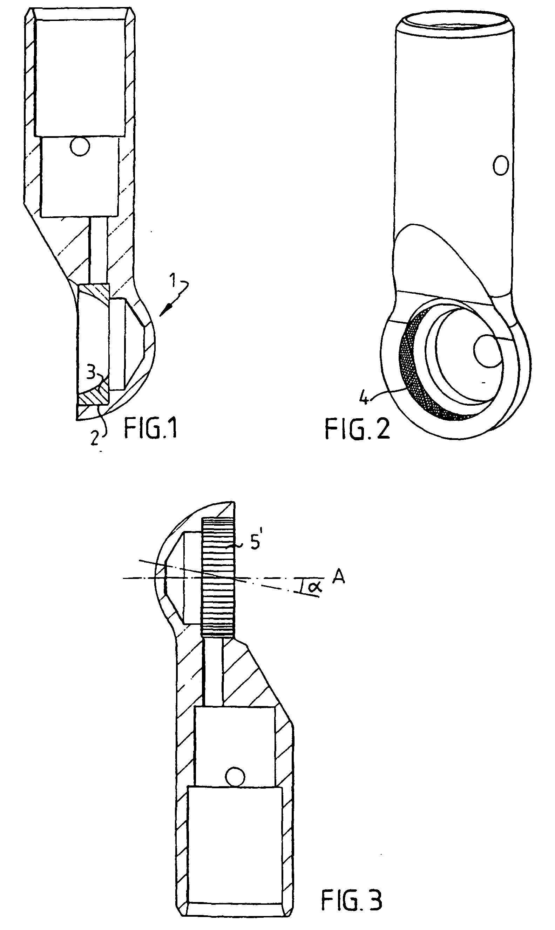

A three-axle ball and socket joint in a robot (Fig. 5) comprises a joint socket and a joint ball. The joint socket 1 encloses the ball of the joint (not shown) with a space that comprises approximately a half of a sphere or less (Fig. 1). A housing 2 shaped to accommodate a bearing means 3 is located within socket 1.
The word bearing here relates to either one annular bearing, several annular bearings or the bearing divided into sections in a way suitable for the purpose. In the embodiment described below, the bearing means comprises one annular bearing means.

The housing 2 includes a surface 4 against which the annular bearing means 3 is pressed to fit tightly (Fig. 2). Annular bearing means 3 is manufactured from a polymer material and is pressed to fit tightly in place with the aid of a tool in the traditional manner. To increase the friction between surface 4 of the joint socket and the annular bearing means 3, friction-increasing means 5 are arranged on the surface 4. The friction-increasing means can be designed as, for example, a wave structure in the form of grooves 5' (Fig. 3). The orientation of the grooves 5' in a longitudirtat direction forms the angle (□) with the centre axis (A) of the annular bearing means. Grooves 5' are preferably parallel with the centre axis (A). In addition, the grooves should have sharply pointed tops to secure the friction. When the annular bearing means 3 is arranged in the housing 2, the friction-increasing means 5 achieve a permanent deformation of the annular bearing means 3 by penetrating its material.

An alternative design of the invention is to make the envelope surface of the bearing means compatible to the friction-increasing means 5 arranged on the surface of the joint socket 4. In the embodiment described above with the friction-increasing means 5 in the form of grooves 5', the bearing means 3 can thus be alternatively designed with grooves that are compatible with the surface of the housing.

A further alternative design of the invention is to design the housing of the joint socket socket-shaped and provided with grooves. Then the bearing means is designed with a socket-shaped outer surface and is placed without being pressed to fit tightly in the housing of the joint socket In this design of the invention, it is the spring force that holds the ball and socket joint together that also fixes the bearing means firmly in place.

## Claims

1. Robot device including at least one linkage device in which pull rods are arranged in a multi-joint system where the joints include three-axle ball and socket joints comprising a socket enclosing a ball with a space comprising half of a sphere or less **characterised in that** a bearing means (3) is fixed so that it does not rotate in a housing (2) in the socket of a joint (1), where housing (2) includes a surface (4) against which the bearing means (3) abuts and that the surface (4) is designed with friction-increasing means (5).

2. Robot device according to claim 1 **characterised in that** the bearing means (3) comprises an annular bearing means (3').

3. Robot device according to claims 1-2 **characterised in that** the friction-increasing means (5) penetrate its material by a permanent deformation of the bearing means (3).

4. Robot device according to claims 1-3 **characterised in that** the friction-increasing means (5) are designed in the form of grooves (5).

5. Robot device according to claims 1-4 **characterised in that** bearing means (3) abuts with surface (4) and is pressed to fit tightly,

6. Robot device according to claim 4 **characterised in that** grooves (5) are oriented primarily parallel with the central axis (A) of the bearing means.

7. Robot device according to claims 1-6 **characterised in that** the bearing means is made of a polymer material.

8. Robot device according to any of claims 1-7 **characterised in that** the robot is a delta robot.

9. Method for a robot device including at least one linkage device in which pull rods are arranged in a multi-joint system where the joints include three-axle ball and socket joints comprising a socket enclosing a ball with a space comprising half of a sphere or less and where a socket (1) of a joint is provided with a housing (2) to accommodate a bearing means (3), where the housing (2) is provided with a surface (4) against which the bearing means abuts **characterised in that** bearing means (3) is fixed so that it does not rotate in housing (2) by providing surface (4) with friction-increasing means (5) that are brought to engage with bearing means (3) when bearing means (3) is positioned in place.

10. Method according to claim 9 **characterised in that** the bearing means (3) is pressed to fit tightly in place in the housing (2) of the joint socket (1).

11. Method according to claim 9 **characterised in that** friction-increasing means (5) deform the material of the bearing means by permanent deformation when bearing means (3) is placed in position.

## Patentansprüche

1. Robotervorrichtung, die mindestens eine Verbindungsvorrichtung beinhaltet, in der Zugstangen in einem Mehrfachgelenksystem angeordnet sind, wobei die Gelenke dreiachsige Kugelgelenke enthalten, die eine Gelenkpfanne umfassen, die eine Kugel mit einem Raum umschließt, der die Hälfte einer Kugel oder weniger umfasst,
**dadurch gekennzeichnet,**
**dass** ein Lagerungsmittel (3) so befestigt ist, dass es in einem Gehäuse (2) in der Gelenkpfanne eines Gelenks (1) nicht rotiert, wobei das Gehäuse (2) eine Oberfläche (4) beinhaltet, gegen welche das Lagerungsmittel (3) anliegt, und
**dass** die Oberfläche (4) mit reibungserhöhenden Mitteln (5) versehen ist.

2. Robotervorrichtung gemäß Anspruch 1, **dadurch gekennzeichnet, dass** das Lagerungsmittel (3) ein ringförmiges Lagerungsmittel (3') umfasst.

3. Robotervorrichtung gemäß den Ansprüchen 1 bis 2, **dadurch gekennzeichnet, dass** die reibungserhöhenden Mittel (5) in das Material des Lagerungsmittel durch eine dauerhafte Verformung des Lagerungsmittels (3) eindringen.

4. Robotervorrichtung gemäß den Ansprüchen 1 bis 3, **dadurch gekennzeichnet, dass** die reibungserhöhenden Mittel (5) in der Form von Rillen (5') ausgelegt sind.

5. Robotervorrichtung gemäß den Ansprüchen 1 bis 4, **dadurch gekennzeichnet, dass** das Lagerungsmittel (3) an der Oberfläche (4) anliegt und angepresst wird, um dicht zu passen.

6. Robotervorrichtung gemäß Anspruch 4, **dadurch gekennzeichnet, dass** die Rillen (5') hauptsächlich parallel zur Mittelachse (A) des Lagerungsmittels ausgerichtet sind.

7. Robotervorrichtung gemäß den Ansprüchen 1 bis 6, **dadurch gekennzeichnet, dass** das Lagerungsmittel aus einem Polymermaterial hergestellt ist.

8. Robotervornchtung gemäß den Ansprüchen 1 bis 7, **dadurch gekennzeichnet, dass** der Roboter ein Deltaroboter ist.

9. Verfahren für eine Robotervorrichtung, welche mindestens eine Verbindungsvorrichtung beinhaltet, in der Zugstangen in einem Mehrfachgelenksystem angeordnet sind, wobei die Gelenke dreiachsige Kugelgelenke enthalten, die eine Gelenkpfanne umfassen, die eine Kugel mit einem Raum umschließt, der die Hälfte einer Kugel oder weniger umfasst, und wobei eine Gelenkpfanne (1) eines Gelenks mit einem Gehäuse (2) ausgestattet ist, um ein Lagerungsmittel (3) aufzunehmen, wobei das Gehäuse (2) mit einer Oberfläche (4) ausgestattet ist, gegen welche das Lagerungsmittel anliegt,
**dadurch gekennzeichnet, dass** das Lagerungsmittel (3) so befestigt ist, dass es im Gehäuse (2) nicht rotiert, indem die Oberfläche (4) mit reibungserhöhenden Mitteln (5) versehen wird, die dazu gebracht werden, mit dem Lagerungsmittel (3) in Eingriff zu stehen, wenn das Lagerungsmittel (3) in Position gebracht wird

10. Verfahren gemäß Anspruch 9, **dadurch gekennzeichnet, dass** das Lagerungsmittel (3) angepresst wird, um im Gehäuse (2) der Gelenkpfanne (1) dicht zu passen.

11. Verfahren gemäß Anspruch 9, **dadurch gekennzeichnet, dass** reibungserhöhende Mittel (5) das Material des Lagerungsmittel durch dauerhafte Verformung verformen, wenn das Lagerungsmittel (3) in Position gebracht wird.

## Revendications

1. Dispositif pour robot comprenant au moins un dispositif de liaison dans lequel des bielles sont agencées en un système à plusieurs articulations où les articulations incluent des joints à rotule à trois axes comprenant une flasque renfermant une bille avec un espace comprenant la moitié d'une sphère ou moins, **caractérisé en ce qu'**un moyen de support (3) est fixé de telle manière qu'il ne tourne pas dans un logement (2) présent dans la flasque d'un joint (1), le logement (2) comportant une surface (4) contre laquelle le moyen de support (3) bute et **en ce que** la surface (4) comporte un moyen augmentant la friction (5).

2. Dispositif pour robot selon la revendication 1, **caractérisé en ce que** le moyen de support (3) comprend un moyen de support annulaire (3').

3. Dispositif pour robot selon les revendications 1 à 2, **caractérisé en ce que** le moyen augmentant la friction (5) pénètre dans sa matière par une déformation permanente du moyen de support (3).

4. Dispositif pour robot selon les revendications 1 à 3, **caractérisé en ce que** le moyen augmentant la friction (5) se présente sous la forme de rainures (5').

5. Dispositif pour robot selon les revendications 1 à 4, **caractérisé en ce que** le moyen de support (3) bute contre la surface (4) et est pressé pour être emmanché serré.

6. Dispositif pour robot selon la revendication 4, **caractérisé en ce que** les rainures (5') sont orientées principalement parallèlement à l'axe (A) du moyen de support.

7. Dispositif pour robot selon les revendications 1 à 6, **caractérisé en ce que** le moyen de support est en matériau polymère.

8. Dispositif pour robot selon les revendications 1 à 7, **caractérisé en ce que** le robot est un robot de type delta.

9. Procédé pour un dispositif pour robot comprenant au moins un dispositif de liaison dans lequel des bielles sont agencées en un système à plusieurs articulations où les articulations incluent des joints à rotule à trois axes comprenant une flasque renfermant une bille avec un espace comprenant la moitié d'une sphère ou moins, et où une flasque (1) d'un joint est pourvue d'un logement (2) destiné à recevoir un moyen de support (3), le logement (2) comportant une surface (4) contre laquelle le moyen de support bute, **caractérisé en ce que** le moyen de support (3) est fixé de manière telle qu'il ne tourne pas dans le logement (2) en munissant la surface (4) d'un moyen augmentant la friction (5) que l'on met en prise avec le moyen de support (3) lorsque le moyen de support (3) est mis en place.

10. Procédé selon la revendication 9, **caractérisé en ce que** le moyen de support (3) est pressé pour être emmanché serré dans le logement (2) de la flasque (1) du joint.

11. Procédé selon la revendication 9, **caractérisé en ce que** le moyen augmentant la friction (5) déforme le matériau du moyen de support par déformation permanente lorsque le moyen de support (3) est mis en place.
